# EUROPÄISCHE PATENTSCHRIFT

(11) **EP 1 140 583 B1**
(45) Veröffentlichungstag und Bekanntmachung des Hinweises auf die Patenterteilung: **09.11.2005**
(21) Anmeldenummer: 00979431.4
(22) Anmeldetag: 18.10.2000
(51) Int. Cl.: B60S 1/24, B60S 1/34

(54) **SCHEIBENWISCHANLAGE FÜR FAHRZEUG UND VERFAHREN ZUM BETREIBEN EINES WISCHHEBELGESTÄNGES**
VEHICLE WIPER SYSTEM AND A METHOD FOR OPERATING A WIPER ARM LINKAGE
DISPOSITIF D'ESSUIE-GLACE POUR VEHICULES ET PROCEDE D'UTILISATION D'UNE TRINGLERIE DE BRAS D'ESSUIE-GLACE

(30) Priorität: 21.10.1999 DE 19950740
(43) Veröffentlichungstag der Anmeldung: 10.10.2001
(73) Patentinhaber: ROBERT BOSCH GMBH, 70442 Stuttgart (DE)
(72) Erfinder: ZIMMER, Joachim, 77880 Sasbach (DE)
(74) Vertreter: Gleiss & Grosse
(86) Internationale Anmeldenummer: PCT/DE2000/003655
(87) Internationale Veröffentlichungsnummer: WO 2001/030617

(56) Entgegenhaltungen:
- US-A- 4 720 885
- US-A- 5 920 948

## Beschreibung

### Stand der Technik

Die Erfindung betrifft eine Scheibenwischanlage für Fahrzeuge gemäß Oberbegriff des Anspruchs 1 und ein Verfahren zum Betreiben eines Wischhebelgestänges einer Scheibenwischanlage für Fahrzeuge nach Anspruch 8.

Eine bekannte Scheibenwischanlage weist einen um eine ortsfest angeordnete Achse frei schwenkbaren Schwenkhebel auf, an dem ein mit einem Wischelement versehener Wischarm befestigt ist. Aufgrund dieser Ausgestaltung folgt der Wischarm einer Kreisbahn, was nur zu einem kleinen Wischfeld führt, das in vielen Fällen nicht den Anforderungen entspricht.

Außerdem ist eine Scheibenwischanlage bekannt, die ein 4-Gelenk-Wischhebelgestänge aufweist, das erste und zweite Schwenkhebel umfasst, die jeweils mit einer ortsfest angeordneten Achse drehfest gekoppelt und gelenkig mit einem Koppelelement verbunden sind. An dem Koppelelement ist ein mit einem Wischelement versehener Wischarm befestigt, der bei einem Verschwenken der Schwenkhebel eine Hub-Schwenk-Bewegung durchführt, was zu einer Vergrößerung des Wischfeldes führt. Nachteilig bei der bekannten Scheibenwischanlage ist der für das Wischhebelgestänge benötigte große Bauraum, der für die Verwendung der Scheibenwischanlage zur Reinigung einer Windschutzscheibe eines Kraftfahrzeugs im Bereich des Fahrzeugsvorderbaus bereitgestellt werden muss. Im Vorderbaubereich des Kraftfahrzeugs ist jedoch nur wenig Platz, der bei zukünftigen Fahrzeugen noch kleiner werden wird, da es sich zeigt, dass das Verhältnis zwischen der Länge des Innenraums zur Gesamtlänge des Kraftfahrzeugs immer größer wird. Zudem zeigt sich, dass das Wischfeld des 4-Gelenk-Wischhebelgestänges nicht groß genug ist, um bei großen Scheibenflächen, die insbesondere bei zukünftigen Fahrzeugen geplant sind, die gesetzlichen Vorschriften einhalten zu können beziehungsweise den steigenden Komfort- und Sicherheitsansprüchen zu genügen. Derartige 4-Gelenk-Wischhebelgestänge sind aus DE-A-44 44 066 bekannt.

Aus der US-A-5,920,948 ist eine Scheibenwischanlage der eingangs genannten Art bekannt, die ein Wischgestänge mit mehr als vier Gelenken aufweist, vgl. Figuren 13 und 14.

### Vorteile der Erfindung

Die erfindungsgemäße Scheibenwischanlage mit den Merkmalen des Anspruchs 1 weist demgegenüber den Vorteil auf, dass bei gleichem Bauraum mit dem Wischhebelgestänge ein deutlich größerer Hub und somit auch ein größeres Wischfeld realisierbar ist. Es ist selbstverständlich auch möglich, ein Wischhebelgestänge zu realisieren, das bei einem zumindest im wesentlichen gleich großen Wischfeld beziehungsweise einem gleich großen Hub, wie er auch bei dem bekannten zum Beispiel 4-Gelenk-Wischhebelgestänge möglich ist, so zu gestalten, dass es einen kleineren Bauraum aufweist. Zur Realisierung eines großen Wischfeldes bei kompakter Bauweise des Wischhebelgestänges ist bei der erfindungsgemäßen Scheibenwischanlage vorgesehen, dass das zweite Koppelteil länger ist, vorzugsweise deutlich länger, als das erste Koppelteil und dass der erste Schwenkhebel und der zweite Schwenkhebel mittels einer Schwenkbewegungskopplung verbunden sind. Es ist ein 5-Gelenk-Wischhebelgestänge realisiert, bei dem eine exakte Steuerung des Hubs möglich ist.

Bei einem besonders vorteilhaften Ausführungsbeispiel der Scheibenwischanlage ist dem Wischhebelgestänge eine Antriebseinrichtung zugeordnet, die erste und zweite Antriebskurbeln aufweist, von denen die erste Antriebskurbel mit der ersten Achse, an der auch der erste Schwenkhebel befestigt ist, drehfest gekoppelt und die zweite Antriebskurbel mit der zweiten Achse, an der der zweite Schwenkhebel gehalten ist, drehfest gekoppelt ist. Die ersten und zweiten Achsen sind also jeweils mit einem Antriebs- oder Bremsmoment beaufschlagbar, das über die Schwenkhebel in das Wischhebelgestänge übertragen wird.

Bei einer vorteilhaften Ausführungsvariante sind die ersten und zweiten Antriebeskurbeln mit Hilfe eines Koppelglieds gelenkig miteinander verbunden. Dadurch sind die Bewegungen der ersten und zweiten Antriebskurbeln und somit auch der ersten und zweiten Schwenkhebel voneinander abhängig, wodurch der durch das zusätzliche Gelenk zwischen dem ersten Koppelteil und dem zweiten Koppelteil gebildete Freiheitsgrad des Wischhebelgestänges ausgeglichen beziehungsweise kompensiert wird. Um die Bewegungen der beiden Antriebskurbeln aufeinander abzustimmen, sind bei einer anderen Ausführungsvariante die ersten und zweiten Antriebskurbeln jeweils mit einer Motorkurbel gelenkig verbunden, wobei die Motorkurbeln wiederum derart miteinander gekoppelt sind, dass deren oszillierende Bewegungen exakt aufeinander abgestimmt sind. Bei beiden Ausführungsvarianten zur Steuerung der Schwenkbewegung der Antriebskurbeln und somit auch die der ersten und zweiten Schwenkhebel ist der Schwenkwinkel der zweiten Antriebskurbel unabhängig von dem mehrteiligen, die Schwenkhebel miteinander verbindenden Koppelelement frei einstellbar, da die ersten und zweiten Koppelteile des Koppelelements gelenkig miteinander verbunden sind und somit ein zusätzlicher Freiheitsgrad des Gelenkfünfecks realisiert ist. Eine Schwenkwinkelverstellung der zweiten Antriebskurbel ist beispielsweise durch eine Längenänderung des Koppelglieds möglich.

Weitere vorteilhafte Ausgestaltungen der Scheibenwischanlage ergeben sich aus den übrigen Unteransprüchen.

Der Gegenstand der Erfindung betrifft auch ein Verfahren zum Betreiben eines Wischhebelgestänges einer Scheibenwischanlage für Fahrzeuge mit den Merkmalen des Anspruchs 8, bei dem vorgesehen ist, dass die erste und zweite Antriebskurbeln jeweils in eine erste Richtung aus einer Ausgangslage des Wischhebelgestänges bis in eine Strecklage, in der das Koppelglied und die erste Antriebskurbel miteinander fluchten, verschwenkt werden, und daraufhin das Wischhebelgestänge aus der Strecklage in eine Umkehrlage durch ein Verschwenken der ersten Antriebskurbel in der ersten Richtung und der zweiten Antriebskurbel in eine zur ersten Richtung entgegengesetzte, zweite Richtung verlagert wird. Im weiteren Verlauf wird das Wischhebelgestänge aus der Umkehrlage in die Strecklage durch ein Verschwenken der ersten Antriebskurbel in der zweiten Richtung und der zweiten Antriebskurbel in der ersten Richtung verlagert, und anschließend werden die erste und zweite Antriebskurbel jeweils in die zweite Richtung aus der Strecklage des Wischhebelgestänges in die Ausgangslage verschwenkt.

Zur Optimierung des Bewegungsablaufs des Wischhebelgestänges ist dieses derart gestaltet, dass während eines Wischzyklus' die erste Antriebskurbel zwei Wendelagen und die zweite Antriebskurbel drei Wendelagen aufweist, in denen jeweils eine Schwenkrichtungsumkehr stattfindet.

Weitere vorteilhafte Ausführungsformen des Verfahrens ergeben sich aus den übrigen Unteransprüchen.

### Zeichnung

Im folgenden wird die Erfindung anhand der Zeichnung näher erläutert. Dabei zeigen:
- Figur 1: eine Prinzipskizze eines Teils eines ersten Ausführungsbeispiels der erfindungsgemäßen Scheibenwischanlage;
- Figur 2: eine Prinzipskizze eines ersten Ausführungsbeispiels einer Antriebseinrichtung für ein Wischhebelgestänge;
- Figur 3: eine Prinzipskizze eines zweiten Ausführungsbeispiels einer Antriebseinrichtung;
- Figuren 4A bis 4C: ein Ausführungsbeispiel des Wischhebelgestänges in drei Stellungen;
- Figur 5: ein Diagramm, aus dem der Hubverlauf des Wischhebelgestänges während eines Wischzyklus' hervorgeht;
- Figuren 6A und 6B: mehrere mit dem Wischhebelgestänge realisierbare Wischfelder;
- Figur 7: Schwenkbereiche von Antriebskurbeln und einem mit diesen gelenkig verbundenen Koppelglied und
- Figur 8: jeweils den Schwenkbereich einer ersten Antriebskurbel und einer zweiten Antriebskurbel eines bekannten 4-Gelenk-Wischhebelgestänges.

### Beschreibung der Ausführungsbeispiele

Die im folgenden beschriebene Scheibenwischanlage 1 ist allgemein einsetzbar, beispielweise für Kraftfahrzeuge (Pkw, Lkw, Bus), Schienen- oder Wasserfahrzeuge. Rein beispielhaft wird im folgenden davon ausgegangen, dass es sich um eine Scheibenwischanlage für ein Kraftfahrzeug handelt.

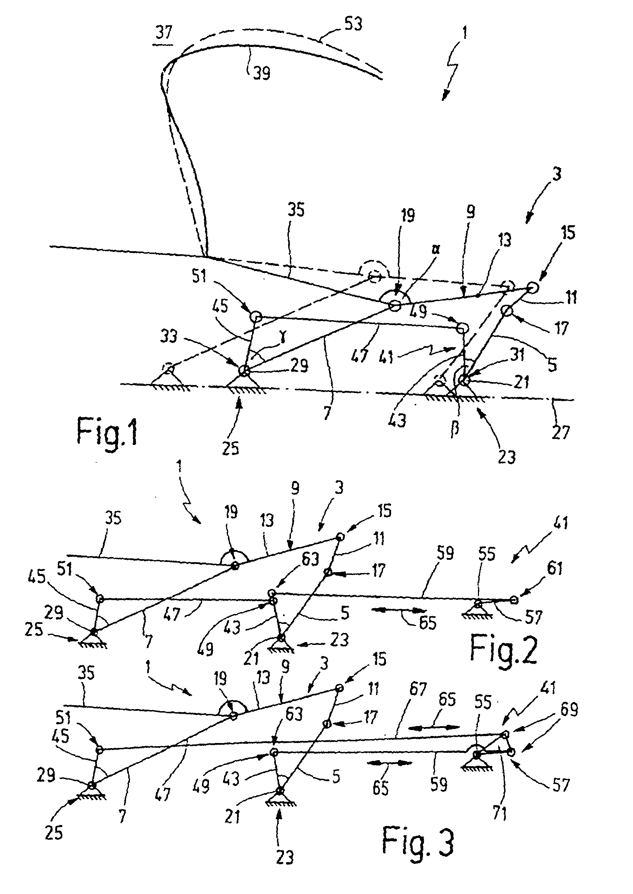

Figur 1 zeigt in schematischer Ansicht einen Teil eines ersten Ausführungsbeispiels der Scheibenwischanlage 1, die ein Wischhebelgestänge 3 umfasst, das einen ersten Schwenkhebel 5, einen zweiten Schwenkhebel 7 und ein Koppelelement 9 aufweist. Das Koppelelement 9 ist mehrteilig ausgebildet und weist ein erstes Koppelteil 11 und ein zweites Koppelteil 13 auf, die mit Hilfe eines Gelenks 15 miteinander gekoppelt sind. Das zweite Koppelteil 13 ist deutlich länger, bei diesem Ausführungsbeispiel um ein mehrfaches länger als das erste Koppelteil 11.

Das erste Koppelteil 11 und der erste Schwenkhebel 5 sind über ein Gelenk 17 und das zweite Koppelteil 13 und der zweite Schwenkhebel 7 mit Hilfe eines Gelenks 19 gelenkig miteinander gekoppelt. Der erste Schwenkhebel 5 ist an seinem dem ersten Koppelteil 11 abgewandten Endbereich drehfest mit einer ersten Achse 21 einer ersten Lagerung 23 drehfest gekoppelt, so dass bei einem Verschwenken der ersten Achse 21 um ihre senkrecht zur Bildebene der Figur 1 verlaufende Längsmittelachse der erste Schwenkhebel 5 entsprechend mit verschwenkt wird. In einem Abstand zur ersten Lagerung 23 ist eine zweite Lagerung 25 vorgesehen, die -wie die erste Lagerung 23- ortsfest. auf einer mit gestrichelter Linie dargestellten Basis 27 angeordnet ist. Die zweite Lagerung 25 weist eine zweite Achse 29 auf, die um ihre Längsmittelachse schwenkbar gelagert und mit der der zweite Schwenkhebel 7 drehfest verbunden ist. Die Achsen 21, 29 sind also quasi weitere Gelenke 31, 33 des Wischhebelgestänges 3, das insgesamt fünf Gelenke aufweist.

Das Wischhebelgestänge 3 weist einen Wischarm 35 auf, der an dem zweiten Koppelteil 13 des Koppelelements 9 befestigt ist. Der Winkel α zwischen dem einen abgewinkelten Grundkörper aufweisenden Wischarm 35 und dem zweiten Koppelteil 13 ist also auch während einer Hub-Schwenk-Bewegung des Wischhebelgestänges 3 konstant und beträgt hier circa 55°.

An dem Wischarm 35 ist ein in Figur 1 nicht dargestelltes Wischelement, das beispielsweise eine Gummilippe aufweisen kann, angebracht, das in bekannter Weise an einer Scheibe des Fahrzeugs anlegbar ist und bei einer Hub-Schwenk-Bewegung des Wischhebelgestänges 3 entsprechend verlagert wird. Dabei wird ein Wischfeld 37 gewischt, dessen Form, Anordnung und Größe durch die Hub-Schwenk-Bewegung des Wischhebelgestänges 3 festgelegt ist. Von dem Wischfeld 37 ist in der Darstellung gemäß Figur 1 lediglich sein unterer Rand 39 erkennbar, der einen kurvenförmigen Verlauf aufweist, wobei neben gekrümmten Abschnitten auch lineare Abschnitte vorhanden sind, in denen der Wischarm 35 -in vertikaler Richtung gesehen- angehoben beziehungsweise bei einer Schwenkrichtungsumkehr des Wischarms 35 abgesenkt oder im wesentlichen in horizontaler Richtung verlagert wird.

Das Längenverhältnis der ersten und zweiten Koppelteile 11, 13 ist deutlich unterschiedlich. Das den Hub erzeugende erste Koppelteil 11 weist eine relativ kleine Länge auf, damit durch seine Bewegung eine möglichst kleine Drehbewegung auf das lange zweite Koppelteil 13 übertragen wird, was ansonsten zur Störung des Bewegungsablaufes des Wischhebelgestänges 3 führen könnte.

Die Scheibenwischanlage 1 umfasst ferner eine Antriebseinrichtung 41 für das Wischhebelgestänge 3, von der in Figur 1 lediglich eine erste Antriebskurbel 43 und eine zweite Antriebskurbel 45 dargestellt sind. Die erste Antriebskurbel 43 ist drehfest mit der ersten Achse 21 gekoppelt, mit der auch der erste Schwenkhebel 5 verbunden ist. Die Anordnung der ersten Antriebskurbel 43 und des ersten Schwenkhebels 5 auf der Achse 21 ist so gewählt, dass sie einander gegenüber in einer verschwenkten Position angeordnet sind, wobei aufgrund der drehfesten Verbindung zwischen der ersten Achse 21 und der Antriebskurbel 43 sowie dem Schwenkhebel 5 der Winkel β zwischen diesen Teilen während einer Hub-Schwenk-Bewegung des Wischhebelgestänges 3 konstant ist. Die zweite Antriebskurbel 45 ist in einer gegenüber dem zweiten Schwenkhebel 7 drehwinkelversetzten Position an der zweiten Achse 29 angeordnet und drehfest mit dieser verbunden. Aufgrund dieser Ausgestaltung ist auch der Winkel γ zwischen Antriebskurbel 45 und Schwenkhebel 7 während einer Verlagerung des Wischhebelgestänges 3 konstant.

Die ersten und zweiten Antriebskurbeln 43, 45 sind mit Hilfe eines Koppelglieds 47 miteinander verbunden, das über ein Gelenk 49 mit der ersten Antriebskurbel 43 einem weiteren Gelenk 51 mit der zweiten Antriebskurbel 45 gelenkig verbunden ist. Aufgrund der Kopplung der beiden Antriebskurbeln 43, 45 miteinander, ist in einfacher Weise eine präzise Steuerung der Schwenkbewegungen der Schwenkhebel 5, 7 realisierbar, worauf im folgenden noch näher eingegangen wird.

In Figur 1 ist mit gestrichelter Linie ein bekanntes 4-Gelenk-Wischhebelgestänge dargestellt, das ebenfalls erste und zweite Schwenkhebel aufweist, die über ein starres, einteiliges Koppelelement miteinander verbunden sind, wobei das Koppelelement über jeweils ein Gelenk mit den Schwenkhebeln verbunden ist. An dem 4-Gelenk-Wischhebelgestänge ist ebenfalls ein Wischarm mit einem Wischelement angebracht, der bei einer Hub-Schwenk-Bewegung des Wischhebelgestänges ein Wischfeld durchfährt, dessen unterer Rand 53 in Figur 1 mit gestrichelter Linie dargestellt ist. Ein Vergleich zeigt, dass das Wischfeld des 5-Gelenk-Wischhebelgestänges 3 und das des 4-Gelenk-Wischhebelgestänges im wesentlichen gleich sind, das heißt, die Höhe und die Breite der Wischfelder sind in etwa gleich groß. Das erfindungsgemäße Wischhebelgestänge 3 benötigt jedoch einen deutlich kleineren Bauraum als das konventionelle 4-Gelenk-Wischhebelgestänge, was insbesondere bei der Anordnung des Wischhebelgestänges 3 im Vorderbaubereich eines Kraftfahrzeugs vorteilhaft ist, da dort nur wenig Platz zur Unterbringung der Scheibenwischanlage 1 vorhanden ist. Ein Grund für die kompakte Bauweise des Wischhebelgestänges 3 ist insbesondere der kleinere Abstand der ersten Lagerung 23 zu der zweiten Lagerung 25 für das Wischhebelgestänge 3, der nur auf grund der mehrteiligen Ausgestaltung des Koppelelements 9 möglich ist.

Im folgenden wird anhand der Figuren 2 und 3 jeweils ein Ausführungsbeispiel der Antriebseinrichtung 41 für die Antriebskurbeln 43, 45 näher erläutert. Teile, die bereits anhand der in Figur 1 dargestellten Scheibenwischanlage 1 beschrieben wurden, sind mit gleichen Bezugszeichen versehen, so dass insofern auf die Beschreibung zur Figur 1 verwiesen wird.

Die Antriebseinrichtung 41 weist eine in einem Abstand zu den Lagerungen 23, 25 des Wischhebelgestänges 3, vorzugsweise zur Fahrzeugmitte hin, ortsfest angeordnete Antriebswelle 55 auf, die mit einem Antriebs- oder Bremsmoment beaufschlagbar und um ihre senkrecht zur Bildebene der Figur 2 verlaufende Längsmittelachse rotierbar ist. An der Antriebswelle 55 ist ein Übertragungshebel 57 befestigt, der bei einer Rotation der Antriebswelle gemeinsam mit dieser rotiert. Die Antriebseinrichtung 41, die bei dem in Figur 2 dargestellten Ausführungsbeispiel als Reihenantrieb ausgebildet ist, weist ferner eine Motorkurbel 59 auf, die über ein Gelenk 61 mit dem Übertragungshebel 57 und an ihrem anderen Endbereich über ein weiteres Gelenk 63 mit der ersten Antriebskurbel 21 gelenkig verbunden ist. Bei Rotation der Antriebswelle 55 wird die Motorkurbel 59 in Richtung eines Doppelpfeils 65 hin und her verlagert. Aufgrund der gelenkigen Kopplung der Motorkurbel 59 mit der ersten Antriebskurbel 43 werden bei einer oszillierenden Bewegung der Motorkurbel 59 die Antriebskurbel 43 und aufgrund deren Kopplung mit der zweiten Antriebskurbel 45 über das Koppelglied 47 auch die zweite Antriebskurbel 45 um die erste Achse 21 beziehungsweise die zweite Achse 29 gemeinsam verschwenkt. Es werden also beide Achsen 21, 29 angetrieben.

Bei dem in Figur 3 dargestellten Ausführungsbeispiel der Antriebseinrichtung 41 ist ein Direktantrieb für die Achsen 21, 29 realisiert. Die Antriebskurbeln 43, 45 sind hier nicht über ein anhand der Figuren 1 und 2 beschriebenes Koppelglied 47 miteinander verbunden, sondern über Motorkurbeln 59 und 67, von denen die Motorkurbel 59 mittels des Gelenks 63 mit der ersten Antriebskurbel 43 und die andere Motorkurbel 67 über das Gelenk 51 mit der zweiten Antriebskurbel 45 gelenkig verbunden sind. An ihren den Antriebskurbeln abgewandten Endbereichen sind die Motorkurbeln 59, 67 jeweils über ein Gelenk 69 mit einem von einer Dreiecksplatte 71 gebildeten Übertragungshebel 57 gelenkig miteinander verbunden, wobei der Übertragungshebel 57 drehfest mit der Antriebswelle 55 verbunden ist. Bei einer Rotation der Antriebswelle 55 um ihre Längsmittelachse werden die Motorkurbeln 59, 67 oszillierend in Richtung der Pfeile 65 im wesentlichen in horizontaler Richtung verlagert, wodurch die Antriebskurbeln 43, 45 und somit die Achsen 21, 29 sowie die mit den Achsen verbundenen ersten und zweiten Schwenkhebel 5, 7 in entsprechender Richtung verschwenkt werden.

Die Gelenke 17, 19 zwischen den Schwenkhebeln 5,7 und dem Koppelelement 9 und das zusätzliche Gelenk 15 zwischen den Koppelteilen 11, 13 sowie vorzugsweise die Gelenke 51, 61, 63, 69 der Antriebseinrichtung 41 sind bei einem vorteilhaften Ausführungsbeispiel als Zylindergelenke ausgebildet, deren Drehachsen parallel zueinander und vorzugsweise parallel zu den ersten und zweiten Achsen 21, 29 verlaufen. Die Gelenke des Wischhebelgestänges 3 sind bei einem vorteilhaften Ausführungsbeispiel als lösbare, momentenübertragende Wellen-Naben-Verbindungen ausgebildet. Die Zylindergelenke weisen eine hohe Steifigkeit auf. Selbstverständlich ist es auch möglich, dass zumindest einige der Gelenke von Kugelgelenken gebildet sind.

Im folgenden wird die Bewegung des Wischhebelgestänges 3 der in Figur 1 dargestellten Scheibenwischanlage 1 anhand der Figuren 4A bis 4C näher erläutert, das in jeder der Figuren in einer unterschiedlichen Stellung dargestellt ist. Es ist ersichtlich, dass das Wischhebelgestänge 3 mit einer anhand der Figur 3 beschriebenen Antriebseinrichtung 41 angetrieben wird.

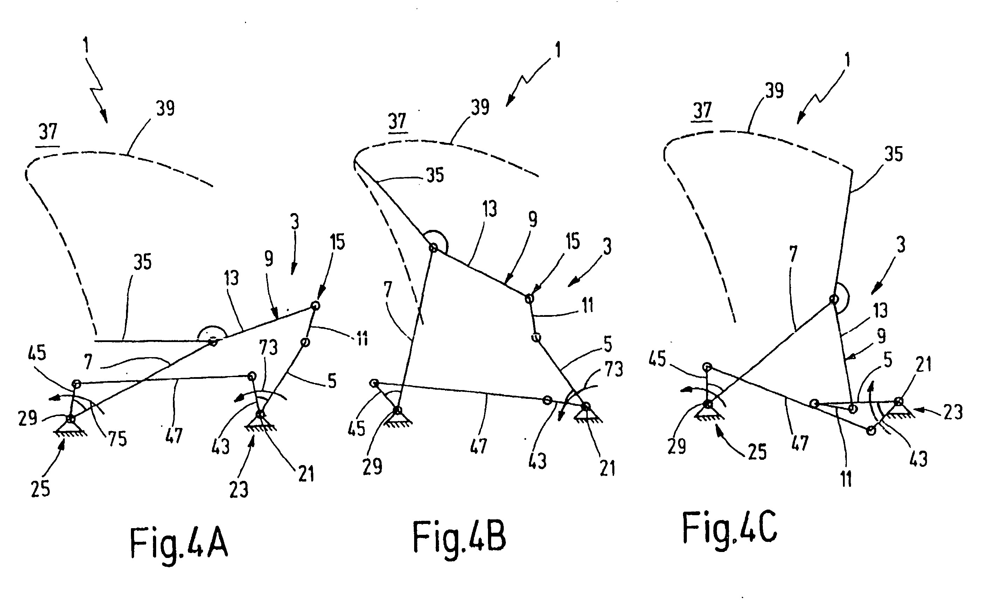

In der in Figur 4A dargestellten Stellung befindet sich das Wischhebelgestänge 3 in einer Ausgangsstellung, in der der Wischarm 35 außerhalb des Wischfeldes 37, vorzugsweise im wesentlichen parallel zu einer gedachten Horizontalen, angeordnet ist. Mit Hilfe der Antriebseinrichtung 41 werden die ersten und zweiten Antriebskurbeln 43, 45, die über das Koppelglied 47 miteinander verbunden sind, entgegen dem Uhrzeigersinn bis in ihre in Figur 4B dargestellte Lage verschwenkt, wie mit Pfeilen 73, 75 angedeutet. In der in Figur 4B dargestellten Stellung befindet sich das Wischhebelgestänge 3 in einer Strecklage, in der das Koppelglied 47 und die erste Antriebskurbel 43 miteinander fluchten. Es ist ersichtlich, dass die ersten und zweiten Koppelteile 11, 13 sich in dieser Funktionsstellung nicht in einer Strecklage befinden, sondern gegeneinander geneigt sind, wodurch ein Verklemmen des Wischhebelgestänges 3 praktisch ausgeschlossen werden kann. Der Wischarm 35 ist in der Strecklage des Wischhebelgestänges 3 in einer Position angeordnet, in der er seinen maximalen Hub erreicht hat. In der Strecklage des Wischhebelgestänges 3 findet nun eine Schwenkrichtungsumkehr der zweiten Antriebskurbel statt, das heißt, die zweite Antriebskurbel 45 wird nun in entgegengesetzter Richtung, also im Uhrzeigersinn verschwenkt, während die erste Antriebskurbel 43 entgegen dem Uhrzeigersinn (Pfeil 73) weiter geschwenkt wird. Die Antriebskurbeln 43, 45 weisen nun also entgegengesetzte Schwenkrichtungen auf, solange, bis das Wischhebelgestänge 3 in die in Figur 4C dargestellte Umkehrlage verlagert ist, in der ein halber Wischzyklus beendet ist.

In der Umkehrlage des Wischhebelgestänges 3 ist der Wischarm 35 in einem geringen Abstand zu einer A-Säule des Fahrzeugs angeordnet. Um den Wischarm 35 in seine Ausgangslage gemäß Figur 4A zurück zu schwenken, wird nun die in Figur 2 dargestellte Motorkurbel 59 durch eine gleichsinnige Rotation der Antriebswelle 55 (Figur 3) nach rechts verlagert. Dabei werden die erste Antriebskurbel 43 im Uhrzeigersinn und die zweite Antriebskurbel 45 entgegen dem Uhrzeigersinn soweit verschwenkt, bis sie erneut die in Figur 4B dargestellte Strecklage erreichen, in der das Koppelglied 47 und die Antriebskurbel 43 wieder miteinander fluchten. In der Strecklage findet erneut eine Drehrichtungsumkehr der zweiten Antriebskurbel 45 statt, die nun gemeinsam mit der ersten Antriebskurbel 43 im Uhrzeigersinn weitergeschwenkt wird, bis sie die in Figur 4A dargestellte Umkehrlage erreichen. Damit ist ein vollständiger Wischzyklus abgeschlossen.

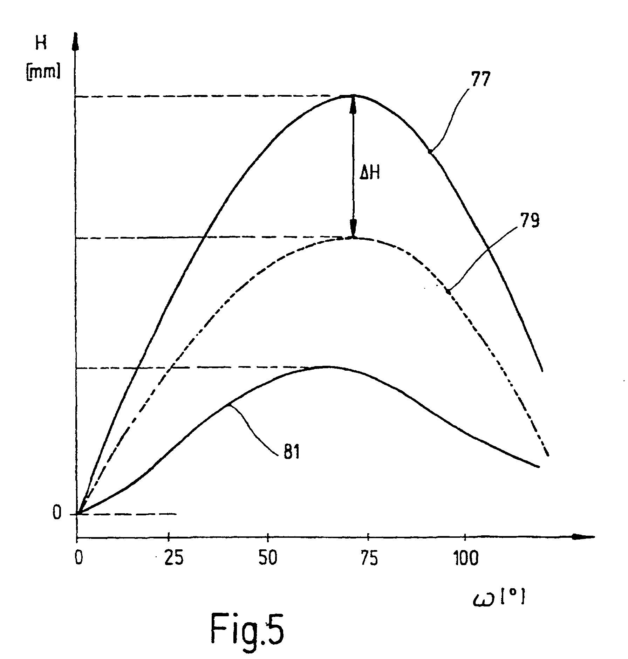

Figur 5 zeigt ein Diagramm, bei dem auf seiner Ordinatenachse der Hub H eines Wischhebelgestänges der hier angesprochenen Art und auf seiner Abszissenachse der Schwenkwinkel ω der ersten Antriebskurbel 43 aufgetragen sind. Eine in Figur 5 dargestellte Kurve 77 zeigt den Hubverlauf des anhand der vorangegangenen Figuren beschriebenen 5-Gelenk-Wischhebelgestänges 3, die die Form einer Parabel aufweist, wobei der Wendepunkt der Parabel in etwa bei ω = 70° liegt, was der Strecklage des Wischhebelgestänges 3 in Figur 4B entspricht. Mit gestrichelter Linie ist eine Kurve 79 dargestellt, die den Hubverlauf eines konventionellen 4-Gelenk-Wischhebelgestänges zeigt. Bei einem Vergleich wird deutlich, dass der maximale Hub des 4-Gelenk-Wischhebelgestänges deutlich kleiner ist als der des erfindungsgemäßen Wischhebelgestänges 3, wobei der Differenzhub ΔH durch das zweigeteilte Koppelelement 9 realisiert ist, dessen Hubverlauf mit einer Kurve 81 dargestellt ist.

Wie aus Figur 5 ersichtlich, wird also der Gesamthub des 5-Gelenk-Wischhebelgestänges 3 aus zwei Teilhüben gebildet. Der erste Teilhub ist innerhalb des Koppelelements 9 gebildet, während der andere Teilhub zwischen dem gestellfesten Drehpunkt (Achse 21) der Antriebskurbel 43 und dem Koppel-Lagerpunkt (Gelenk 51) der zweiten Antriebskurbel 45 stattfindet. Die Summe der beiden Teilhübe ergibt den Gesamthub des 5-Gelenk-Wischhebelgestänges 3. Die kinematische Auslegung des Wischhebelgestänges 3 ist vorzugsweise derart gewählt, dass das Maximum der beiden Teilhübe gleichzeitig erfolgt und somit der größtmögliche Gesamthub erzielt wird. Vorteilhaft ist ferner, dass der Ort des maximalen Hubs des Wischhebelgestänges 3 relativ frei wählbar ist, da die Anordnung des jeweilige Orts des maximalen Hubs der beiden Teilhübe mehrere Kombinationsmöglichkeiten bietet, indem Hebellängen oder die Orte der Gelenkdrehpunkte entsprechend variiert werden.

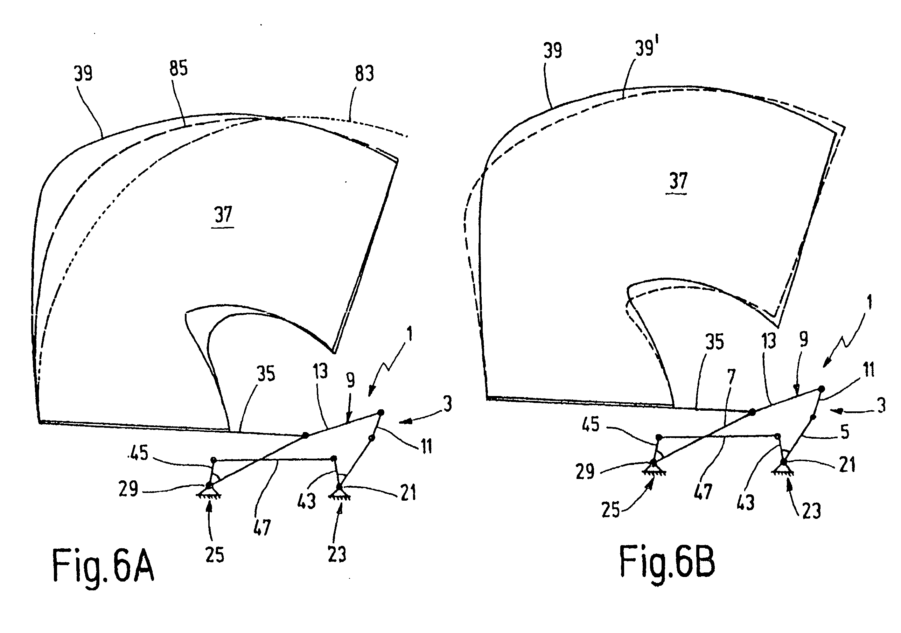

In Figur 6A ist ein Ausführungsbeispiel des Wischhebelgestänges 3 dargestellt, mit dem ein Wischfeld 37 realisierbar ist, dessen Rand 39 mit durchgezogener Linie dargestellt ist. Außerdem ist der Rand 83 eines teilkreisringförmigen Wischfeldes eines bekannten wischhebelgestänges dargestellt, das einen ungesteuerten Hub aufweist, das heißt, dessen Wischarm wird lediglich um eine ortsfeste Achse verschwenkt. Der Rand 83 weist also eine Kreisform mit dem Mittelpunkt der Schwenkachse des Wischarms auf. In Figur 6A ist ferner ein weiteres Wischfeld mit einem Rand 85 dargestellt, das mit einem bekannten 4-Gelenk-Wischhebelgestänge realisierbar ist, wie es anhand von Figur l beschrieben ist. Es ist ersichtlich, dass der Hub des erfindungsgemäßen Wischhebelgestänges 3 gegenüber dem mit der bekannten 4-Gelenk-Wischhebelgestänge realisierbaren Hub -bei vorzugsweise im wesentlichen gleich großer Baugröße- deutlich größer ist. Das große Wischfeld bedeutet für einen Fahrzeugsinsassen größere Sicherheit und Komfort.

In Figur 6B sind weitere Wischfelder 37 mit den Rändern 39 beziehungsweise 39' dargestellt, die mit dem erfindungsgemäßen Wischhebelgestänge 3 realisierbar sind. Um die Geometrie des Wischfeldes 37 zu bestimmen, müssen lediglich die Längen der Schwenkhebel 5, 7, die des Koppelelements 9 beziehungsweise der Koppelteile 11, 13 sowie der ersten und zweiten Antriebskurbeln 43, 45 entsprechend eingestellt beziehungsweise aneinander angepasst werden. Zusätzlich kann durch einen aufeinander abgestimmten Bewegungsablauf der ersten und zweiten Antriebskurbeln 43, 45 ebenfalls Einfluss auf die Geometrie des Wischfeldes genommen werden.

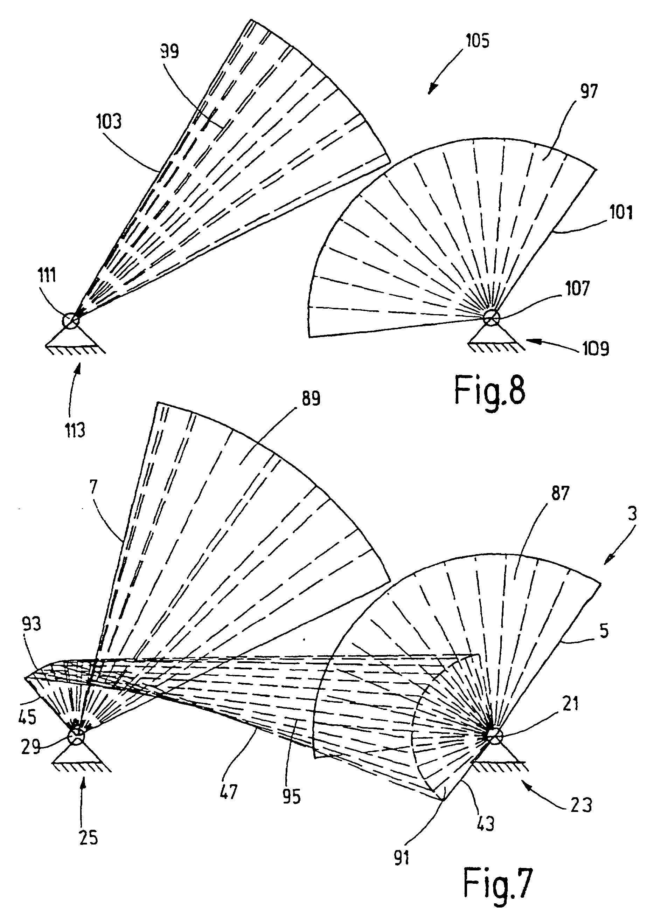

Figur 7 zeigt einen Ausschnitt eines Ausführungsbeispiels des Wischhebelgestänges 3 und der Antriebseinrichtung 41. Im Detail sind der Schwenkbereich 87 des ersten Schwenkhebels 5, der Schwenkbereich 89 des zweiten Schwenkhebels 7, der Schwenkbereich 91 der ersten Antriebskurbel 43, der Schwenkbereich 93 der zweiten Antriebskurbel 45 sowie der Schwenkbereich 95 des Koppelglieds 47 dargestellt. Im Vergleich dazu sind in Figur 8 die Schwenkbereiche 97 und 99 von ersten und zweiten Schwenkhebeln 101 und 103 des bekannten 4-Gelenk-Wischhebelgestänges 105 dargestellt. Der Schwenkhebel 101 ist drehfest mit einer Achse 107 einer ortsfesten Lagerung 109 und der zweite Schwenkhebel 103 mit einer Achse 111 einer zweiten Lagerung 113 verbunden. Es wird deutlich, dass der Schwenkbereich 89 des zweiten Schwenkhebels 7 des erfindungsgemäßen 5-Gelenk-Wischhebelgestänges 3 deutlich größer ist als der Schwenkbereich 99 des zweiten Schwenkhebels 103 des bekannten 4-Gelenk-Wischhebelgestänges 105, während der Schwenkbereich 87 des ersten Schwenkhebels 5 und der Schwenkbereich 97 des ersten Schwenkhebels 101 im wesentlichen gleich groß sind.

Zusammenfassend ist festzuhalten, dass durch das anhand der vorangegangenen Figuren beschriebene 5-Gelenk-Wischhebelgestänge 3 ein deutlich größerer Hub und somit ein vergrößertes Wischfeld realisierbar ist, als mit den eingangs genannten Wischhebelgestängen, was durch die gelenkig miteinander und mit den ersten und zweiten Schwenkhebeln 5, 7 verbunden Koppelteilen 11, 13 erreicht wird. Ein weiterer Vorteil des 5-Gelenk-Wischhebelgestänges 3 besteht darin, dass die Gelenktechnik und vorzugsweise zumindest Teile der Antriebseinrichtung von dem bekannten 4-Gelenk-Wischhebelgestänge übernommen werden kann. Das Wischhebelgestänge 3 weist gegenüber dem bekannten Wischhebelgestänge reduzierte Übersetzungsverhältnisse auf, wodurch die kinematische Güte des Getriebes. verbessert und damit das zum Betrieb erforderliche Motoranzugsmoment (das auf die Antriebswelle 55 aufzubringende Drehmoment) reduziert ist. Das Wischhebelgestänge 3 weist einen einfachen Aufbau auf, insbesondere deshalb, da auf aufwendige Kreuzwinkelgetriebe verzichtet werden kann.

Vorteilhaft ist außerdem, dass die Relativwinkel zwischen den bewegten Teilen (erster Schwenkhebel 5 und erstes Koppelteil 11/zweiter Schwenkhebel 7 und zweites Koppelteil 13) des 5-Gelenk-Wischhebelgestänges 3 gegenüber einem bekannten 4-Gelenk-Wischhebelgestänge deutlich kleiner sind. Dadurch werden auch die Gelenke geringer beansprucht, so dass gegebenenfalls kleinere Gelenke eingesetzt werden können.

## Patentansprüche

1. Scheibenwischanlage (1) für Fahrzeuge mit mindestens einem mindestens einen Wischarm (35) aufweisenden Wischhebelgestänge (3), das einen mit einer ortsfesten ersten Achse (21) drehfest koppelbaren ersten Schwenkhebel (5) und einen mit einer ortsfesten zweiten Achse (29) drehfest koppelbaren zweiten Schwenkhebel (7) umfasst, die gelenkig mit einem Koppelelement (9) verbunden sind, welches mehrteilig ausgebildet ist und ein erstes Koppelteil (11) und ein zweites Koppelteil (13) aufweist, die mit Hilfe eines ersten Gelenks (15) miteinander gekoppelt sind, und wobei der Wischarm (35) am zweiten Koppelteil (13) befestigt ist und das erste Koppelteil (11) an seinem dem ersten Gelenk (15) abgewandten Ende mittels eines zweiten Gelenks (17) mit dem ersten Schwenkhebel (5) und das zweite Koppelteil (13) an seinem dem ersten Gelenk (15) abgewandten Ende mittels eines dritten Gelenks (19) mit dem zweiten Schwenkhebel (7) verbunden ist, **dadurch gekennzeichnet, dass** das zweite Koppelteil (13) länger ist, vorzugsweise deutlich länger, als das erste Koppelteil (11) und dass der erste Schwenkhebel (5) und der zweite Schwenkhebel (7) mittels einer Schwenkbewegungskopplung verbunden sind.

2. Scheibenwischanlage nach Anspruch 1, **gekennzeichnet durch** eine Antriebseinrichtung (41) für das Wischhebelgestänge (3), die mindestens eine mit der ersten Achse (21) oder der zweiten Achse (29) drehfest koppelbare erste Antriebskurbel (43) umfasst.

3. Scheibenwischanlage nach einem der vorhergehenden Ansprüche, **dadurch gekennzeichnet, dass** die erste Antriebskurbel (43) mit der erste Achse (21) drehfest koppelbar ist und dass die Antriebseinrichtung (41) eine mit der zweiten Achse (29) drehfest koppelbare zweite Antriebskurbel (45) aufweist.

4. Scheibenwischanlage nach einem der vorhergehenden Ansprüche, **gekennzeichnet durch** ein die ersten und zweiten Antriebskurbeln (43,45) miteinander verbindendes Koppelglied (47), das über jeweils ein Gelenk (49,51) mit den Antriebskurbeln (43,45) gekoppelt ist, und dass mindestens eine Motorkurbel (59) mit der ersten Antriebskurbel (43) oder der zweiten Antriebskurbel (45) gelenkig verbunden ist.

5. Scheibenwischanlage nach einem der vorhergehenden Ansprüche 1 bis 3, **dadurch gekennzeichnet, dass** die ersten und zweiten Antriebskurbeln (43,45) jeweils mit einer Motorkurbel (59,67) gelenkig verbunden sind.

6. Scheibenwischanlage nach einem der vorhergehenden Ansprüche, **dadurch gekennzeichnet, dass** die Motorkurbel (59,67) quer oder im wesentlichen quer zu den ersten und zweiten Achsen (21,29) verlagerbar ist.

7. Scheibenwischanlage nach einem der vorhergehenden Ansprüche, **dadurch gekennzeichnet, dass** die Gelenke (17,19) zwischen den Schwenkhebeln (5,7) und dem Koppelelement (9) und das zusätzliche Gelenk (15) zwischen den Koppelteilen (11,13) als Zylindergelenke ausgebildet sind, deren Drehachsen parallel zueinander und vorzugsweise parallel zu den ersten und zweiten Achsen (21,29) verlaufen.

8. Verfahren zum Betreiben eines mindestens einen Wischarm (35) aufweisenden Wischhebelgestänges (3) einer Scheibenwischanlage (1) für Fahrzeuge nach einem oder mehreren der vorhergehenden Ansprüche, das einen mit einer ortsfesten ersten Achse (21) drehfest koppelbaren ersten Schwenkhebel (5), einen mit einer ortsfesten zweiten Achse (29) drehfest koppelbaren zweiten Schwenkhebel (7), eine mit der ersten Achse (21) drehfest koppelbare erste Antriebskurbel (43), eine mit der zweiten Achse (29) drehfest koppelbare zweite Antriebskurbel (45) sowie ein mit den Antriebskurbeln (43,45) gelenkig verbundenes Koppelglied (47) umfasst, mit folgenden Schritten während eines Wischzyklus:
- Verschwenken der ersten und zweiten Antriebskurbeln (43,45) jeweils in eine erste Richtung aus einer Ausgangslage des Wischhebelgestänges (3) bis in eine Strecklage, in der das Koppelglied (47) und die erste Antriebskurbel (43) miteinander fluchten,
- Verlagerung des Wischhebelgestänges (3) aus der Strecklage in eine Umkehrlage durch ein Verschwenken der ersten Antriebskurbel (43) in der ersten Richtung und der zweiten Antriebskurbel (45) in eine zur ersten Richtung entgegengesetzte, zweite Richtung,
- Verlagerung des Wischhebelgestänges (3) aus der Umkehrlage in die Strecklage durch ein Verschwenken der ersten Antriebskurbel (43) in der zweiten Richtung und der zweiten Antriebskurbel (45) in der ersten Richtung,
- Verschwenken der ersten und zweiten Antriebskurbeln (43,45) jeweils in die zweite Richtung aus der Strecklage des Wischhebelgestänges (3) in die Ausgangslage.

## Claims

1. Vehicle wiper system (1) having at least one wiper arm linkage (3) which has at least one wiper arm (35) and comprises a first pivoting lever (5), which can be coupled in a rotationally fixed manner to a positionally fixed first spindle (21), and a second pivoting lever (7), which can be coupled in a rotationally fixed manner to a positionally fixed second spindle (29), which pivoting levers are connected in an articulated manner to a coupling element (9) which is of multipart design and has a first coupling part (11) and a second coupling part (13) which are coupled to each other with the aid of a first joint (15), and the wiper arm (35) being fastened to the second coupling part (13) and the first coupling part (11) being connected at its end facing away from the first joint (15) to the first pivoting lever (5) by means of a second joint (17), and the second coupling part (13) being connected at its end facing away from the first joint (15) to the second pivoting lever (7) by means of a third joint (19), **characterized in that** the second coupling part (13) is longer, preferably significantly longer, than the first coupling part (11), and **in that** the first pivoting lever (5) and the second pivoting lever (7) are connected by means of a pivoting movement coupling.

2. Wiper system according to Claim 1, **characterized by** a driving device (41) for the wiper arm linkage (3), the said driving device comprising at least one first driving crank (43) which can be coupled in a rotationally fixed manner to the first spindle (21) or to the second spindle (29).

3. Wiper system according to one of the preceding claims, **characterized in that** the first driving crank (43) can be coupled in a rotationally fixed manner to the first spindle (21), and **in that** the driving device (41) has a second driving crank (45) which can be coupled in a rotationally fixed manner to the second spindle (29).

4. Wiper system according to one of the preceding claims, **characterized by** a coupling link (47) which connects the first and second driving cranks (43, 45) to each other and is coupled to the driving cranks (43, 45) via a respective joint (49, 51), and in that at least one motor crank (59) is connected in an articulated manner to the first driving crank (43) or to the second driving crank (45).

5. Wiper system according to one of the preceding Claims 1 to 3, **characterized in that** the first and second driving cranks (43, 45) are respectively connected in an articulated manner to a motor crank (59, 67).

6. Wiper system according to one of the preceding claims, **characterized in that** the motor crank (59, 67) can be displaced transversely or substantially transversely to the first and second spindles (21, 29).

7. Wiper system according to one of the preceding claims, **characterized in that** the joints (17, 19) between the pivoting levers (5, 7) and the coupling element (9), and the additional joint (15) between the coupling parts (11, 13) are designed as cylindrical joints whose rotational axes run parallel to one another and preferably parallel to the first and second spindles (21, 29).

8. Method for operating a wiper arm linkage (3) of a vehicle wiper system (1), which linkage has at least one wiper arm (35), according to one or more of the preceding claims, the said linkage comprising a first pivoting lever (5), which can be coupled in a rotationally fixed manner to a positionally fixed first spindle (21), a second pivoting lever (7), which can be coupled in a rotationally fixed manner to a positionally fixed second spindle (29), a first driving crank (43), which can be coupled in a rotationally fixed manner to the first spindle (21), a second driving crank (45), which can be coupled in a rotationally fixed manner to the second spindle (29), and a coupling link (47) which is connected in an articulated manner to the driving cranks (43, 45), having the following steps during a wiper cycle:
- pivoting the first and second driving cranks (43, 45) in each case in a first direction from a starting position of the wiper arm linkage (3) to an extended position, in which the coupling link (47) and the first driving crank (43) are aligned with each other,
- displacing the wiper arm linkage (3) from the extended position into a reversing position by pivoting the first driving crank (43) in the first direction and the second driving crank (45) in a second direction opposed to the first direction,
- displacing the wiper arm linkage (3) from the reversing position into the extended position by pivoting the first driving crank (43) in the second direction and the second driving crank (45) in the first direction,
- pivoting the first and second driving cranks (43, 45) in each case in the second direction from the extended position of the wiper arm linkage (3) into the starting position.

## Revendications

1. Installation d'essuie-glace (1) pour véhicule comportant au moins une tringlerie de levier d'essuie-glace (3) avec au moins un bras d'essuie-glace (35) comprenant un premier levier pivotant (5) couplé solidairement en rotation à un premier axe (21) fixe et un second levier pivotant (7) couplé solidairement en rotation à un second axe fixe (29), ces leviers étant reliés par articulation à un élément de couplage (9) en plusieurs parties, ayant une première pièce de couplage (11) et une seconde pièce de couplage (13) couplées l'une à l'autre par l'intermédiaire d'une première articulation (15), et
le bras d'essuie-glace (35) est fixé à la seconde pièce de couplage (13) et la première pièce de couplage (11) est reliée par son extrémité opposée à celle de la première articulation (15) par l'intermédiaire d'une seconde articulation (17) au premier levier pivotant (5) et la seconde pièce de couplage (13) est reliée par son extrémité opposée à la première articulation (15) par l'intermédiaire d'une troisième articulation (19) au second levier pivotant (7),
**caractérisée en ce que**
la seconde pièce de couplage (13) est plus longue et notamment significativement plus longue que la première pièce de couplage (11), et
le premier levier pivotant (5) et le second levier pivotant (7) sont reliés par un couplage de mouvement de pivotement.

2. Installation d'essuie-glace selon la revendication 1,
**caractérisée en ce qu'**
une installation d'entraînement (41) de la tringlerie de levier d'essuie-glace (3) comprend au moins une première manivelle d'entraînement (43) couplée solidairement en rotation au premier axe (21) ou au second axe (29).

3. Installation d'essuie-glace selon l'une quelconque des revendications précédentes,
**caractérisée en ce que**
la première manivelle d'entraînement (43) est susceptible d'être couplée solidairement en rotation au premier axe (21), et l'installation d'entraînement (41) comporte une seconde manivelle d'entraînement (45) susceptible d'être couplée solidairement en rotation au second axe (29).

4. Installation d'essuie-glace selon l'une quelconque des revendications précédentes,
**caractérisée par**
un élément de couplage (47) reliant la première et la seconde manivelle d'entraînement (43, 45), cet élément de couplage étant couplé aux manivelles d'entrainement (43, 45) chaque fois par une articulation (49, 51), et
au moins une manivelle de moteur (59) est reliée de manière articulée à la première manivelle d'entraînement (43) ou la seconde manivelle d'entraînement (45).

5. Installation d'essuie-glace selon l'une quelconque des revendications 1 à 3,
**caractérisée en ce que**
la première et la seconde manivelle d'entraînement (43, 45) sont reliées de manière articulée respectivement à une manivelle de moteur (59, 67).

6. Installation d'essuie-glace selon l'une quelconque des revendications précédentes,
**caractérisée en ce que**
la manivelle de moteur (59, 67) est mobile transversalement ou essentiellement transversalement par rapport au premier et au second axes (21, 29).

7. Installation d'essuie-glace selon l'une quelconque des revendications précédentes,
**caractérisée en ce que**
les articulations (17, 19) entre les leviers pivotants (5, 7) et l'élément de couplage (9) et l'articulation complémentaire (15) entre les pièces de couplage (11, 13) sont des articulations cylindriques dont les axes de rotation sont parallèles et de préférence parallèles au premier et au second axes (21, 29).

8. Procédé de commande d'une tringlerie de levier d'essuie-glace (3) comportant au moins un bras d'essuie-glace (35) dans une installation d'essuie-glace (1) de véhicule selon l'une ou plusieurs des revendications précédentes, comprenant un premier levier pivotant (5) couplé solidairement en rotation à un premier axe fixe (21), un second levier pivotant (7) susceptible d'être couplé solidairement en rotation à un second axe fixe (29), une première manivelle d'entraînement (43) susceptible d'être couplée solidairement en rotation au premier axe (21), une seconde manivelle d'entraînement (45) susceptible d'être couplée solidairement en rotation au second axe (29) ainsi qu'un élément de couplage (47) relié de manière articulée aux manivelles d'entraînement (43, 45), procédé comprenant les étapes suivantes d'un cycle d'essuyage :
- basculement des première et seconde manivelles d'entraînement (43, 45) chaque fois dans une première direction à partir d'une position de repos de la tringlerie de levier d'essuyage (3) jusqu'à une position étendue dans laquelle l'élément de couplage (47) et la première manivelle d'entraînement (43) sont alignés,
- déplacement de la tringlerie de levier d'essuyage (3) à partir de la position allongée dans une position d'inversion par basculement de la première manivelle d'entraînement (43) dans la première direction et de la seconde manivelle d'entraînement (45) dans une seconde direction opposée à la première direction,
- déplacement de la tringlerie de levier d'essuyage (3) à partir de la position d'inversion dans la position d'extension par basculement de la première manivelle d'entraînement (43) dans la seconde direction et de la seconde manivelle d'entraînement (45) dans la première direction,
- basculement de la première et de la seconde manivelle d'entraînement (43, 45) chaque fois dans la seconde direction à partir de la position d'extension de la tringlerie de levier d'essuie-glace (3) dans la position de repos.
